# EUROPEAN PATENT APPLICATION

(11) **EP 4 552 810 A1**
(43) Date of publication of application: **14.05.2025**
(21) Application number: 23860253.6
(22) Date of filing: 28.08.2023
(51) Int. Cl.: B25J 19/04, G06T 7/70

(54) **ROBOT SYSTEM, AND METHOD FOR CONTROLLING ROBOT SYSTEM**

(30) Priority: 30.08.2022 JP 2022136820
(71) Applicant: KAWASAKI JUKOGYO KABUSHIKI KAISHA, Kobe-shi, Hyogo 650-8670 (JP)
(72) Inventor: OHNO, Seita, Chuo-ku, Kobe-shi, Hyogo 650-8670 (JP); SHOJI, Tadashi, Chuo-ku, Kobe-shi, Hyogo 650-8670 (JP)
(74) Representative: Müller-Boré & Partner Patentanwälte PartG mbB
(86) International application number: PCT/JP2023/030877
(87) International publication number: WO 2024/048491

(57) **Abstract**

A robot system (100) acquires, in a calibration operation, a reference image while a robot arm (11) is placed in one reference posture. Furthermore, the robot system (100) sets a plurality of calibration postures of the robot arm (11) based on the reference image that has been acquired such that an imager (21, 22) images an identification member in a state in which the identification member is included in a field of view of the imager (21, 22), and acquires, for each of the plurality of calibration postures that have been set, a calibration image for calibration obtained by imaging the identification member with the imager (21, 22).

## Description

### Technical Field

The present disclosure relates to a robot system and a method for controlling a robot system.

### Background Art

Conventionally, a robot system is known that controls the operation of a robot arm based on a captured image captured by an imager. For example, Japanese Patent Laid-Open No. 2022-028672 discloses a system including a vision system camera and a robot arm. In the system disclosed in Japanese Patent Laid-Open No. 2022-028672, hand-eye calibration, which is a calibration operation, is performed to control movement of the robot arm within a scene imaged by the camera. In the hand-eye calibration, a calibration object attached to the robot arm is moved such that images of the calibration object in many different positions are captured by the camera. Then, the transformation from a robot coordinate space to a camera coordinate space is computed by identifying features of the calibration object in the captured images.

In the system described in Japanese Patent Laid-Open No. 2022-028672, a pre-calibration process is performed such that the calibration object is placed within the field of view of the camera in the hand-eye calibration. In the pre-calibration process, a three-point calibration is performed within the field of view of the camera, and the rough transformation from the robot coordinate space to an image coordinate space is computed. Specifically, in the pre-calibration process, a feature pattern of the calibration object is first placed in a central region of the field of view of the camera. Then, the three-point calibration is performed using the identified feature points of the calibration object by moving the calibration object while adjusting a step size, which is a movement distance. Based on the rough transformation from the robot coordinate space to the camera coordinate space and the size of the field of view of the camera, spatial positions that maintain the features of the calibration object within the field of view of the camera are computed such that the range of motion of a robot in the hand-eye calibration is set.

### Prior Art

### Patent Document

Patent Document 1: Japanese Patent Laid-Open No. 2022-028672

### Summary of the Invention

In the robot system described in Japanese Patent Laid-Open No. 2022-028672, in order to perform the hand-eye calibration to associate the robot coordinate space, which is position information of the robot arm, with the camera image coordinate system, which is position information of the captured image, the pre-calibration process is performed in which the rough transformation is computed by performing the three-point calibration while changing the position of the robot arm. Therefore, in the hand-eye calibration, which is a calibration operation, in order to set a plurality of postures of the robot arm, it is necessary to move the calibration object to three positions in advance to acquire images, and it is necessary to perform a rough transformation computation process to associate the position information of the robot arm with the position information of the captured image in advance based on the acquired images of the three positions, and thus the time and processing amount required for a control process in the calibration operation are conceivably increased. Therefore, it is desired to reduce or prevent increases in the time and processing amount required for the control process in the calibration operation to associate the position information of the robot arm with the position information of the captured image.

The present disclosure is intended to solve the above problems. The present disclosure aims to provide a robot system and a method for controlling a robot system each capable of reducing or preventing increases in the time and processing amount required for a control process in a calibration operation to associate position information of a robot arm with position information of a captured image.

In order to attain the aforementioned object, a robot system according to a first aspect of the present disclosure includes a robot arm to which a hand operable to perform an operation on a workpiece is attached, an imager to image the workpiece, and a controller configured or programmed to perform a calibration operation to associate position information of the robot arm with position information of a captured image captured by the imager in order to operate the robot arm based on the captured image. The controller is configured or programmed to acquire a reference image, which is the captured image obtained by imaging an identification member for calibration with the imager while the robot arm is placed in one posture, set, in the calibration operation, a plurality of calibration postures of the robot arm based on the reference image that has been acquired such that the imager images the identification member in a state in which the identification member is included in a field of view of the imager, and acquire, for each of the plurality of calibration postures that have been set, a calibration image, which is the captured image for calibration obtained by imaging the identification member with the imager.

In the robot system according to the first aspect of the present disclosure, as described above, the controller is configured or programmed to acquire the reference image, which is one captured image obtained by imaging the identification member for calibration with the imager while the robot arm is placed in the one posture. The controller is configured or programmed to set, in the calibration operation, the plurality of calibration postures of the robot arm based on the acquired reference image such that the imager images the identification member in a state in which the identification member is included in the field of view of the imager. Furthermore, the controller is configured or programmed to acquire, for each of the plurality of set calibration postures, the calibration image, which is the captured image for calibration obtained by imaging the identification member with the imager. Accordingly, the plurality of calibration postures of the robot arm are set based on the reference image, which is one captured image, and thus as compared with a case in which the calibration postures are set by performing rough transformation in advance based on a plurality of captured images, such as a three-point calibration, it is possible to decrease the time required for a control process for setting the calibration postures, and decrease the processing amount in the control process. Consequently, in the calibration operation to associate the position information of the robot arm with the position information of the captured image, increases in the time and processing amount required for the control process can be reduced or prevented.

In order to attain the aforementioned object, a method for controlling a robot system according to a second aspect of the present disclosure includes performing a calibration operation to associate position information of a robot arm to which a hand operable to perform an operation on a workpiece is attached with position information of a captured image captured by an imager operable to image the workpiece, and controlling operation of the robot arm based on the captured image captured by the imager after performing the calibration operation. The performing the calibration operation includes acquiring a reference image, which is the captured image obtained by imaging an identification member for calibration with the imager while the robot arm is placed in one posture, setting a plurality of calibration postures of the robot arm based on the reference image that has been acquired such that the imager images the identification member in a state in which the identification member is included in a field of view of the imager, and acquiring, for each of the plurality of calibration postures that have been set, a calibration image, which is the captured image for calibration obtained by imaging the identification member with the imager.

In the method for controlling the robot system according to the second aspect of the present disclosure, as described above, the reference image is acquired, which is one captured image obtained by imaging the identification member for calibration with the imager while the robot arm is placed in the one posture. The plurality of calibration postures of the robot arm are set based on the acquired reference image in the calibration operation such that the imager images the identification member in a state in which the identification member is included in the field of view of the imager. Furthermore, the calibration image, which is the captured image for calibration obtained by imaging the identification member with the imager, is acquired for each of the plurality of set calibration postures. Accordingly, the plurality of calibration postures of the robot arm are set based on the reference image, which is one captured image, and thus as compared with a case in which the calibration postures are set by performing rough transformation in advance based on a plurality of captured images, such as a three-point calibration, it is possible to decrease the time required for a control process for setting the calibration postures, and decrease the processing amount in the control process. Consequently, it is possible to provide the method for controlling a robot system capable of reducing or preventing increases in the time and processing amount required for the control process in the calibration operation to associate the position information of the robot arm with the position information of the captured image.

According to the present disclosure, as described above, it is possible to provide the robot system and the method for controlling a robot system each capable of reducing or preventing increases in the time and processing amount required for the control process in the calibration operation to associate the position information of the robot arm with the position information of the captured image.

### Brief Description of the Drawings

FIG. 1 is a schematic view showing the overall configuration of a robot system according to an embodiment of the present disclosure.
FIG. 2 is a diagram showing examples of captured images captured by each of two imagers.
FIG. 3 is a diagram for illustrating a plurality of calibration images for calibration.
FIG. 4 is a diagram for illustrating an arrangement of the fields of view of the two imagers and an identification member.
FIG. 5 is a diagram showing an example of a reference image 51a.
FIG. 6 is a diagram showing an example of a reference image 52a.
FIG. 7 is a diagram for illustrating acquisition of four calibration postures in a reference plane.
FIG. 8 is a diagram showing an example of calibration images in the four calibration postures in the reference plane.
FIG. 9 is a diagram for illustrating acquisition of four calibration postures behind the reference plane.
FIG. 10 is a diagram showing an example of calibration images in the four calibration postures behind the reference plane.
FIG. 11 is a diagram for illustrating acquisition of four calibration postures in front of the reference plane.
FIG. 12 is a diagram showing an example of calibration images in the four calibration postures in front of the reference plane.
FIG. 13 is a flowchart showing a method for controlling the robot system according to the embodiment of the present disclosure.

### Modes for Carrying Out the Invention

An embodiment embodying the present disclosure is hereinafter described on the basis of the drawings.

### Configuration of Robot System

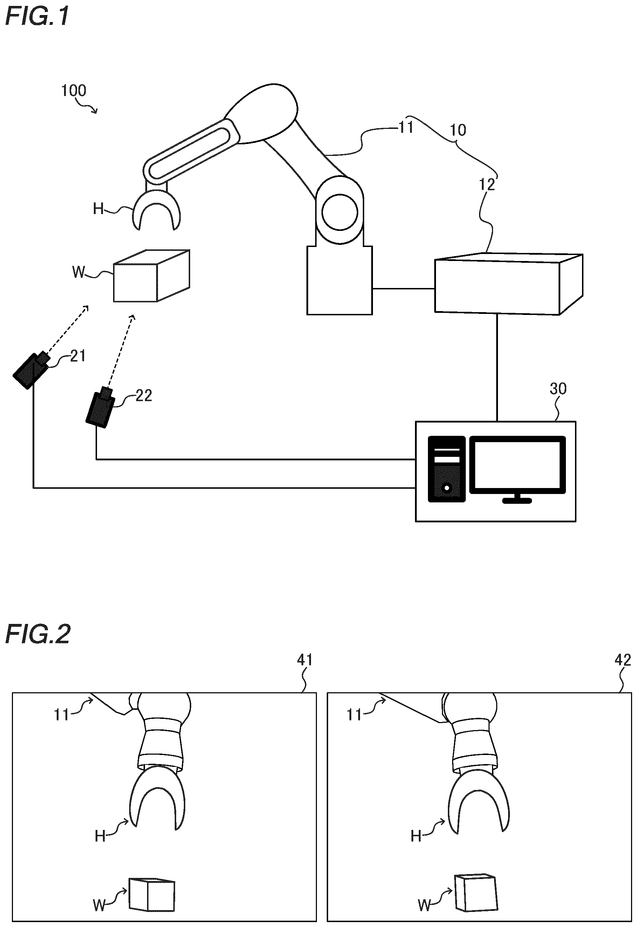

The configuration of a robot system 100 according to the embodiment of the present disclosure is now described with reference to FIGS. 1 to 12.

As shown in FIG. 1, the robot system 100 is a system in which a robot arm 11 performs an operation on a workpiece W imaged by an imager 21 and an imager 22. For example, the robot arm 11 performs an operation to transfer the workpiece W arranged in the vicinity of the robot arm 11 to a predetermined location. In an example shown in FIG. 1, the workpiece W is a cardboard box.

The robot system 100 includes a robot 10, the imager 21, the imager 22, and a vision controller 30. The imager 21 is an example of an "imager" or a "first imager" in the claims. The imager 22 is an example of an "imager" or a "second imager" in the claims. The vision controller 30 is an example of a "controller" in the claims.

The robot 10 includes the robot arm 11 and a robot controller 12. The robot arm 11 is a vertical articulated robot arm including a plurality of joints. A hand H that performs an operation on the workpiece W is attached to the robot arm 11. For example, the hand H grips the workpiece W. The hand H is attached to a distal end of the robot arm 11. The robot arm 11 is controlled by the robot controller 12 to operate the plurality of joints. For example, the robot arm 11 operates due to driving of drives such as servomotors provided at the plurality of joints. The robot controller 12 is an example of a "controller" in the claims.

The robot controller 12 controls the operation of the robot arm 11. The robot controller 12 also controls the operation of the hand H attached to the robot arm 11. The robot controller 12 includes, for example, a processor such as a central processing unit (CPU) and a memory to store information. The robot controller 12 communicates with the vision controller 30.

The imager 21 and the imager 22 image the workpiece W. The imager 21 and the imager 22 include an imaging device such as a complementary metal-oxide semiconductor (CMOS) image sensor or a charge coupled device (CCD) image sensor. The imager 21 is arranged at a first location different from the robot arm 11. The imager 22 is arranged at a second location different from the robot arm 11, separately from the imager 21. Each of the first location and the second location is, for example, a floor surface, a wall surface, or a base of the robot arm 11, which is spaced apart from the robot arm 11. That is, the imager 21 and the imager 22 are fixed and arranged at locations at which the workpiece W is imaged, separately from the operation of the robot arm 11. Each of the imager 21 and the imager 22 is placed so as to image a common workpiece W. The imager 21 and the imager 22 are arranged as stereo cameras configured to acquire the three-dimensional position of the workpiece W. Therefore, the imager 21 and the imager 22 are fixed while being spaced apart from each other by a predetermined distance in a right-left direction in order to identify the position of the workpiece W by triangulation. The imager 21 and the imager 22 are connected in parallel to each other to the vision controller 30.

The vision controller 30 is an image processor that processes images captured by the imager 21 and the imager 22. The vision controller 30 includes a personal computer including processors such as a CPU and a graphics processing unit (GPU), a memory to store information, and a storage such as a hard disk drive (HDD) or a solid state drive (SSD), for example.

As shown in FIG. 2, the vision controller 30 controls the imager 21 and the imager 22 to acquire a captured image 41 captured by the imager 21 and a captured image 42 captured by the imager 22. The vision controller 30 then performs image processing on the captured images 41 and 42 to detect the workpiece W contained in each of the captured images 41 and 42. The captured image 41 is an example of a "first captured image" or a "captured image" in the claims. The captured image 42 is an example of a "second captured image" or a "captured image" in the claims.

### Control of Robot Arm Based on Captured Images

In the robot system 100, the robot arm 11 grips the workpiece W based on the captured images 41 and 42, which are images of the workpiece W captured by the imager 21 and imager 22, through control processes by the robot controller 12 and the vision controller 30. The vision controller 30 outputs a signal to the robot controller 12 to control the operation of the robot arm 11 based on the images 41 and 42 captured by the imager 21 and the imager 22. Specifically, the vision controller 30 performs image processing on the image 41 captured by the imager 21 and the image 42 captured by the imager 22 to acquire the three-dimensional position of the workpiece W in order to control the operation of the robot arm 11. The vision controller 30 then outputs a signal indicating the acquired three-dimensional position of the workpiece W to the robot controller 12. The robot controller 12 controls the operation of the robot arm 11 to perform an operation on the workpiece W based on the signal from the vision controller 30. That is, the robot controller 12 recognizes the three-dimensional position of the workpiece W based on the signal from the vision controller 30. Then, based on the recognized position of the workpiece W, the robot controller 12 operates the robot arm 11 and the hand H such that the hand H attached to the robot arm 11 grips the workpiece W.

### Calibration Operation

In the robot system 100, when the robot arm 11 grips the workpiece W based on the captured images 41 and 42, it is necessary to recognize the relative relationship between the coordinate systems of the imager 21 and the imager 22 and the coordinate system of the robot arm 11. Therefore, the robot controller 12 and the vision controller 30 perform a calibration operation to associate position information of the robot arm 11 with position information of the captured images 41 and 42 in advance while communicating with each other in order to operate the robot arm 11 based on the images 41 and 42 captured by the imager 21 and the imager 22. That is, in this embodiment, the robot controller 12 and the vision controller 30 operate as controllers that perform the calibration operation by performing the control processes while communicating with each other. The calibration operation is performed when the robot system 100 is installed or when the imager 21 and the imager 22 are replaced, for example.

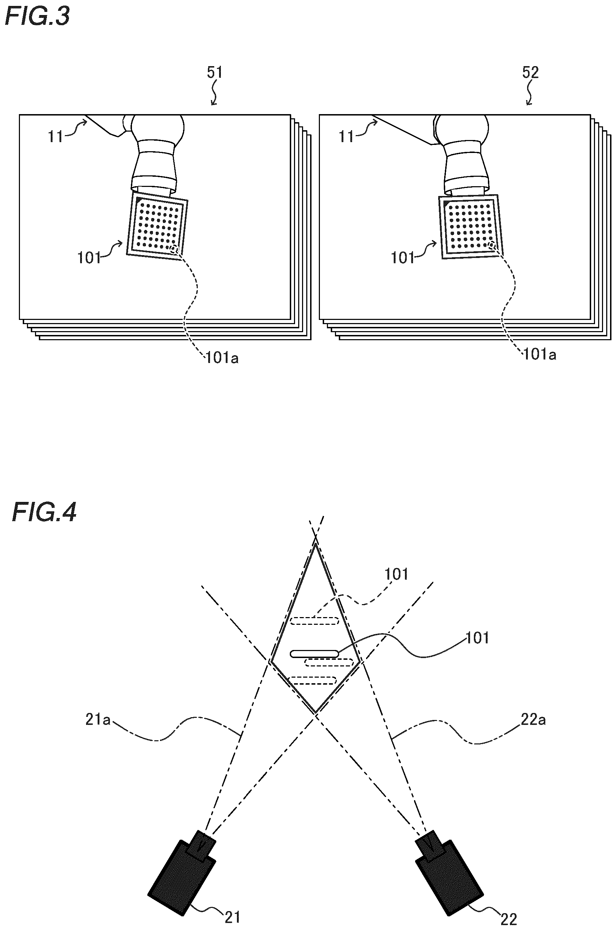

As shown in FIG. 3, in the calibration operation, an identification member 101 for calibration attached to the hand H at the distal end of the robot arm 11 is imaged a plurality of times by the imager 21 and the imager 22 while the posture of the robot arm 11 is changed by the robot controller 12 such that a plurality of calibration images 51, which are a plurality of captured images 41 for calibration, and a plurality of calibration images 52, which are a plurality of captured images 42 for calibration, are acquired by the vision controller 30. Then, the vision controller 30 identifies the position and angle of the identification member 101 for calibration contained in the plurality of calibration images 51 and the plurality of calibration images 52 by image processing to perform a computation process to associate the position information of the robot arm 11 with the position information of the captured image 41 and the captured image 42. The identification member 101 is a plate-shaped member on which a plurality of identification points 101a are arranged in a lattice pattern.

Specifically, as shown in FIG. 4, in the calibration operation, the robot controller 12 moves the robot arm 11 to a plurality of calibration postures to place the identification member 101 attached to the hand H at a position included in both the field of view 21a of the imager 21 and the field of view 22a of the imager 22. The vision controller 30 controls the imager 21 and the imager 22 to image the identification member 101 placed at the position included in both the field of view 21a of the imager 21 and the field of view 22a of the imager 22 for each of the plurality of calibration postures. In this embodiment, the robot controller 12 automatically sets the plurality of calibration postures of the robot arm 11. The posture of the robot arm 11 in this description refers to the arrangement position and arrangement angle of the robot arm 11.

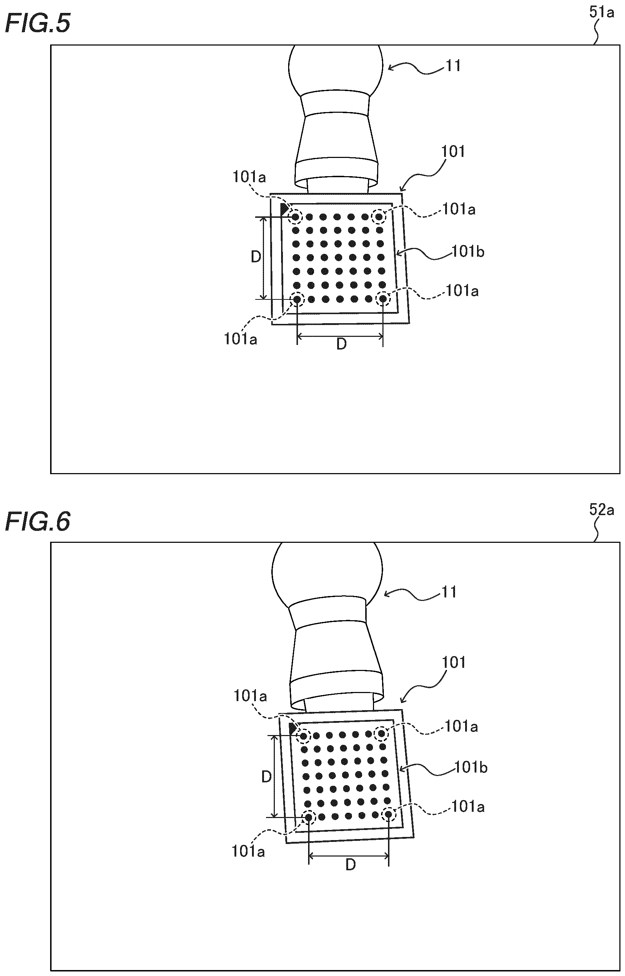

As shown in FIG. 5, in the calibration operation, a reference image 51a is first acquired as a reference to acquire the plurality of calibration postures. In this embodiment, the vision controller 30 acquires the reference image 51a obtained by imaging the identification member 101 with the imager 21 while the robot arm 11 is placed in one reference posture. The reference image 51a is one captured image 41 obtained by imaging the identification member 101 arranged on the robot arm 11 in the reference posture with the imager 21. In the reference posture, the identification member 101 is located at a position that is an approximate center of the field of view 21a of the imager 21 and also an approximate center of the field of view 22a of the imager 22. Therefore, the reference image 51a is captured such that the identification member 101 is located at an approximate center of the image. The reference image 51a is an example of a "reference image" or a "first reference image" in the claims.

As shown in FIG. 6, similarly to the reference image 51a, in order to acquire the plurality of calibration postures, one reference image 52a is acquired by imaging the identification member 101 arranged on the hand H of the robot arm 11 with the imager 22 while the robot arm 11 is placed in one reference posture. Similarly to the reference image 51a, the reference image 52a captured by the imager 22 is captured such that the identification member 101 is located at an approximate center of the image. The reference image 52a is an example of a "reference image" or a "second reference image" in the claims.

In the reference posture, the identification member 101 is arranged such that a surface of the identification member 101 on which the identification points 101a are arranged faces both the imager 21 and the imager 22. The imager 21 and the imager 22 are spaced apart from each other, and thus the identification member 101 is arranged such that the surface on which the identification points 101a are arranged faces a midpoint between the positions of the imager 21 and the imager 22 while the identification member 101 is arranged on the robot arm 11 in the reference posture. Therefore, in both the reference image 51a and the reference image 52a, the identification member 101 is imaged with the surface on which the plurality of identification points 101a are arranged facing substantially forward.

The control amount for placing the robot arm 11 in the reference posture is set based on an input by an operator. For example, the vision controller 30 displays the captured images 41 and 42, which are images from the imager 21 and the imager 22, on a display (not shown) such as a display connected to the vision controller 30, and displays a cross-shaped image or the like for identifying a center position, superimposed on each of the captured images 41 and 42. Then, the operator places the identification member 101 at the center position of both the field of view 21a of the imager 21 and the field of view 22a of the imager 22 while visually recognizing the cross shape for identifying the center position on the display (not shown). For example, based on an input operation on an operation unit (not shown) such as a keyboard or a mouse connected to the vision controller 30 or the robot controller 12, the robot controller 12 changes the posture of the robot arm 11 to adjust the arrangement of the identification member 101 so as to set the reference posture.

In this embodiment, the robot controller 12 and the vision controller 30 set, in the calibration operation, the plurality of calibration postures of the robot arm 11 based on the acquired reference images 51a and 52a such that the imager 21 and the imager 22 image the identification member 101 in a state in which the identification member 101 is included in both the field of view 21a of the imager 21 and the field of view 22a of the imager 22. The robot controller 12 and the vision controller 30 set the plurality of calibration postures of the robot arm 11 based on the distance D of an identification position on the actual identification member 101 and the distance D of an identification position on the on-image identification member 101 in the reference image 51a in the calibration operation. The distance D of the identification position is a distance between a plurality of identification points 101a on the identification member 101. For example, the distance D of the identification position is a distance between identification points 101a at the four corners among the plurality of identification points 101a arranged in a lattice pattern.

Specifically, the vision controller 30 detects a frame line 101b included in the identification member 101 in each of the acquired reference images 51a and 52a. Then, the vision controller 30 identifies each of the plurality of identification points 101a included inside the frame line 101b, which are arranged in a lattice pattern. Then, the vision controller 30 acquires the distance between the identification points 101a at the four corners among the plurality of identification points 101a to acquire the distance D of the identification position on the on-image identification member 101 in the reference images 51a and 52a. The distance D of the identification position on the on-image identification member 101 is, for example, a numerical value expressed by the number of pixels. Furthermore, the distance D of the identification position on the on-image identification member 101 is acquired, for example, along the horizontal direction and the vertical direction of the image. Then, the vision controller 30 stores in advance the distance D of the actual identification position, which is the distance between the identification points 101a at the four corners of the actual identification member 101.

The vision controller 30 compares the distance D of the identification position on the actual identification member 101 with the distance D of the identification position on the on-image identification member 101 in the reference images 51a and 52a to calculate a limit movement amount that indicates how far the robot arm 11 can move the identification member 101, which is included in both the field of view 21a of the imager 21 and the field of view 22a of the imager 22, without the identification member 101 going out of the field of view 21a and the field of view 22a. Then, the vision controller 30 outputs the calculated movement amount to the robot controller 12. The robot controller 12 acquires the movement amount output from the vision controller 30 and sets a calibration posture based on the acquired movement amount. In this embodiment, the robot controller 12 and the vision controller 30 set twelve calibration postures to acquire the calibration images 51 and 52 based on the acquired reference images 51a and 51b.

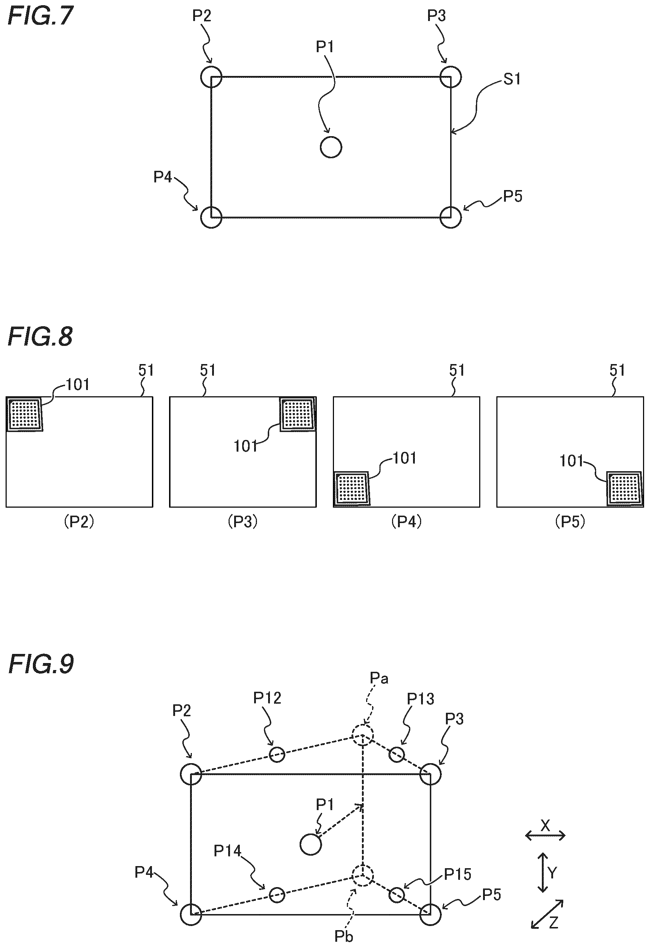

As shown in FIG. 7, the robot controller 12 and the vision controller 30 set four calibration postures of the robot arm 11 so as to move the identification member 101 to four positions P2, P3, P4, and P5 in a predetermined reference plane S1 based on the acquired reference images 51a and 52a. The predetermined reference plane S1 includes a position P1, which is the position of the identification member 101 when the reference image 51a and the reference image 52a are captured. The reference plane S1 is a plane along the surface of the identification member 101 on which the identification points 101a are arranged. When moving the identification member 101 from the position P1 to the positions P2, P3, P4, and P5, the vision controller 30 outputs, to the robot controller 12, a signal indicating a movement amount for moving the identification member 101 along the surface of the identification member 101 on which the identification points 101a are arranged.

As shown in FIG. 8, the robot controller 12 sets the four calibration postures of the robot arm 11 such that the identification member 101 is located at each of the four corners of the calibration images 51 and 52 by moving the identification member 101 to the four positions P2, P3, P4, and P5 in the predetermined reference plane S1 based on the signal indicating the movement amount acquired from the vision controller 30. In FIG. 8, only the calibration images 51 are illustrated, and illustration of the calibration images 52 is omitted. The positions P2, P3, P4, and P5 are calculated by the vision controller 30 such that the identification member 101 is included in both the field of view 21a of the imager 21 and the field of view 22a of the imager 22. That is, the vision controller 30 calculates the value of the movement amount that is the limit of the movement distance of the actual identification member 101 relative to the imagers 21 and 22 such that the identification member 101 is placed within the field of view 21a of the imager 21 and the field of view 22a of the imager 22, in each of the reference image 51a captured by the imager 21 and the reference image 52a captured by the imager 22. Then, the vision controller 30 acquires the positions P2, P3, P4, and P5 according to the reference image 51a or the reference image 52a, whichever has a smaller limit movement amount of the identification member 101. The robot controller 12 changes the posture of the robot arm 11 such that the identification member 101 is located at the positions P2, P3, P4, and P5. Each time the identification member 101 is placed at each of the positions P2, P3, P4, and P5, the robot controller 12 outputs, to the vision controller 30, a signal to instruct the vision controller 30 to capture the calibration images 51 and 52, and outputs a signal indicating a posture for placing the identification member 101 at each of the positions P2, P3, P4, and P5. When the calibration images 51 and 52 obtained by imaging the identification member 101 at the positions P2, P3, P4, and P5 do not include a portion or the whole of the identification member 101, the vision controller 30 corrects the positions P2, P3, P4, and P5. In such a case, the movement distance from the center position P1 is gradually decreased from the calculation result, for example. In other words, the value of the calculated limit movement amount is gradually decreased toward the center of the image. Then, the movement amounts corresponding to the corrected positions P2, P3, P4, and P5 are output again to the robot controller 12, and the calibration images 51 and 52 are captured again.

After the calibration images 51 and 52 are acquired by imaging the identification member 101 located at the positions P2, P3, P4, and P5, the robot controller 12 further sets eight postures of the robot arm 11 so as to move the identification member 101 to a position between each of the four positions P2, P3, P4, and P5 in the reference plane S1 and a point on the far side, which is a first side in a direction perpendicular to the reference plane S1, and a position between each of the four positions P2, P3, P4, and P5 in the reference plane S1 and a point on the near side, which is a second side in the direction perpendicular to the reference plane S1.

For example, as shown in FIG. 9, the robot controller 12 acquires four positions P12, P13, P14, and P15 to acquire four calibration postures on the far side, which is the first side in the direction perpendicular to the reference plane S1. After the position P1 is moved toward the far side, the robot controller 12 acquires the uppermost position of the field of view 21a of the imager 21 and the field of view 22a of the imager 22 as a position Pa and the lowermost position as a position Pb. Then, the robot controller 12 acquires a midpoint between the position Pa and the position P2 as the position P12, a midpoint between the position Pa and the position P3 as the position P13, a midpoint between the position Pb and the position P4 as the position P14, and a midpoint between the position Pb and the position P5 as the position P15.

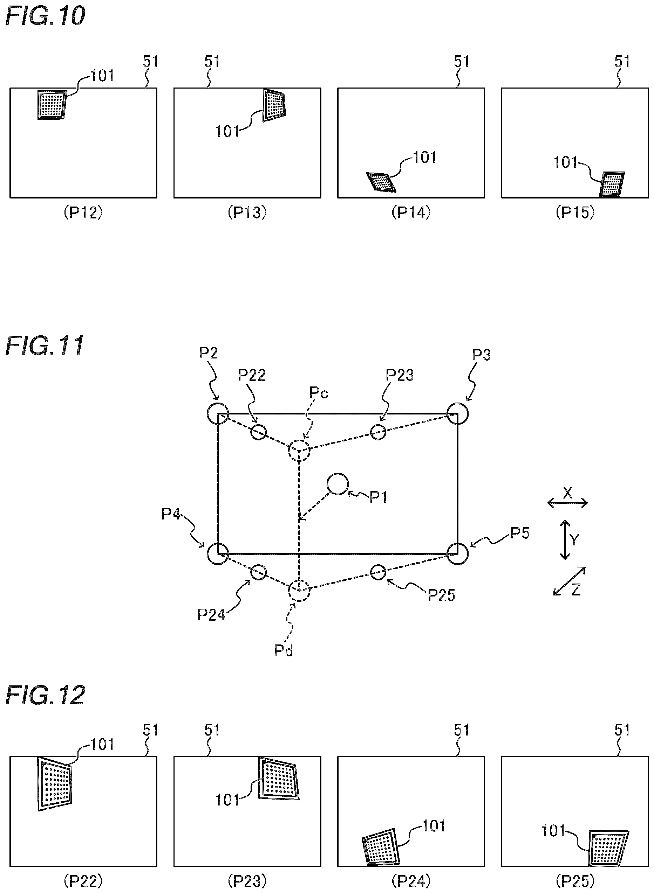

Then, as shown in FIG. 10, each time the identification member 101 is placed at each of the positions P12, P13, P14, and P15, the robot controller 12 outputs, to the vision controller 30, a signal to instruct the vision controller 30 to capture the calibration images 51 and 52, and outputs a signal indicating a posture for placing the identification member 101 at each of the positions P12, P13, P14, and P15. The robot controller 12 sets calibration postures such that the identification member 101 is placed at different angles relative to the imagers 21 and 22 from the reference posture at the positions P12, P13, P14, and P15. That is, at the positions P2, P3, P4, and P5, the calibration postures are set such that the identification member 101 is moved parallel to the reference plane S1 from the posture at the position P1, but at the positions P12, P13, P14, and P15, the surface of the identification member 101 on which the identification points 101a are arranged is placed so as not to face the reference plane S1. For example, when mutually perpendicular directions in the reference plane S1 are defined as an X direction and a Y direction, and a direction perpendicular to the reference plane S1 is defined as a Z direction, at the positions P12, P13, P14, and P15, the identification member 101 is placed in a state rotated by a predetermined angle around at least one of the X direction, the Y direction, or the Z direction from the state in the reference posture. The angular directions at the positions P12, P13, P14, and P15 are preset.

As shown in FIG. 11, similarly to the case on the far side, the robot controller 12 acquires four positions P22, P23, P24, and P25 to acquire four calibration postures on the near side, which is the second side in the direction perpendicular to the reference plane S1. After the position P1 is moved toward the near side, the robot controller 12 acquires the uppermost position of the field of view 21a of the imager 21 and the field of view 22a of the imager 22 as a position Pc and the lowermost position as a position Pd. Then, the robot controller 12 acquires a midpoint between the position Pc and the position P2 as the position P22, a midpoint between the position Pc and the position P3 as the position P23, a midpoint between the position Pd and the position P4 as the position P24, and a midpoint between the position Pd and the position P5 as the position P25.

Then, as shown in FIG. 12, each time the identification member 101 is placed at each of the positions P22, P23, P24, and P25, the robot controller 12 outputs, to the vision controller 30, a signal to instruct the vision controller 30 to capture the calibration images 51 and 52, and outputs a signal indicating a posture for placing the identification member 101 at each of the positions P22, P23, P24, and P25. Similarly to the positions P12, P13, P14, and P15, at the positions P22, P23, P24, and P25, the surface of the identification member 101 on which the identification points 101a are arranged is placed so as not to face the reference plane S1. Similarly to the positions P12, P13, P14, and P15, at the positions P22, P23, P24, and P25, the identification member 101 is placed in a state rotated by a predetermined angle around at least one of the X direction, the Y direction, or the Z direction from the state in the reference posture. The angular directions at the positions P22, P23, P24, and P25 are also preset. FIGS. 8, 10, and 12 show examples of only the calibration images 51, but the same applies to the calibration images 52. In the calibration images 51 in FIGS. 8, 10, and 12, illustration of the robot arm 11 is omitted.

The distances of the positions Pa and Pb toward the far side from the reference plane S1 are preset. The distances toward the far side may be changed based on an input operation by the operator. Similarly, the distances of the positions Pc and Pd toward the near side from the reference plane S1 are also preset and may be changed by the operator. The angular directions at the positions P12, P13, P14, and P15 and the angular directions at the positions P22, P23, P24, and P25 may be changed by an input operation by the operator.

The robot controller 12 sets, as calibration postures, thirteen postures that are obtained by adding the reference posture to the twelve calibration postures set based on the reference posture. Then, the vision controller 30 acquires thirteen calibration images 51 and thirteen calibration images 52 by capturing images with the imager 21 and the imager 22 in the thirteen set calibration postures. Then, the vision controller 30 performs the calibration operation by performing the computation process to associate the position information of the robot arm 11 with the position information of the imagers 21 and 22, based on the position of the identification member 101 in each of the acquired thirteen calibration images 51 and thirteen calibration images 52 and the posture of the robot arm 11 at the time at which each of the thirteen calibration images 51 and the thirteen calibration images 52 is captured. Specifically, the vision controller 30 detects the coordinates of the identification points 101a on the identification member 101 in each of the acquired thirteen calibration images 51 and thirteen calibration images 52. Then, the vision controller 30 performs the computation process to associate the coordinate system of the robot 10, which is the position information of the robot arm 11, with each of the coordinate systems of the imager 21 and the imager 22 by associating the coordinates of the identification points 101a in each of the thirteen calibration images 51 and the thirteen calibration images 52 with the thirteen calibration postures.

### Method for Controlling Robot System

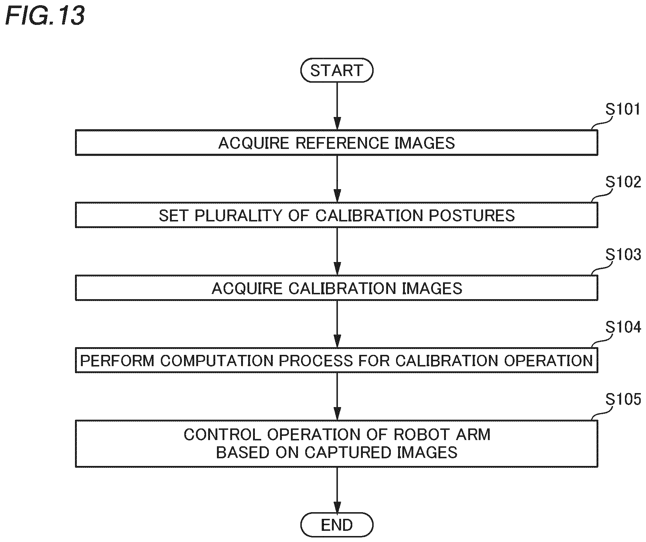

A method for controlling the robot system 100 is now described with reference to FIG. 13. The method for controlling the robot system 100 is performed by the robot controller 12 and the vision controller 30 performing the control processes.

As shown in FIG. 13, first, in step S101, the calibration operation is started, and the reference image 51a and the reference image 52a are acquired. Specifically, the robot arm 11 is set to one reference posture based on an operation by the operator. Then, the identification member 101 for calibration is imaged using the imager 21 and the imager 22 while the robot arm 11 is placed in the reference posture such that one reference image 51a and one reference image 52a are acquired.

Next, in step S102, a plurality of calibration postures of the robot arm 11 are set based on the acquired reference images 51a and 52a such that the identification member 101 is imaged by each of the imager 21 and the imager 22 while being included in both the field of view 21a of the imager 21 and the field of view 22a of the imager 22. Specifically, based on the distance D of the identification position on the actual identification member 101 and the distance D of the identification position on the on-image identification member 101 in each of the reference images 51a and 52a, thirteen calibration postures are set such that the identification member 101 is placed at the thirteen positions, namely the positions P1, P2, P3, P4, and P5, the positions P12, P13, P14, and P15, and the positions P22, P23, P24, and P25.

Next, in step S103, a plurality of calibration images 51 and 52 captured by the imager 21 and the imager 22 in the plurality of set calibration postures are acquired. Specifically, the identification member 101 is imaged in each of the thirteen calibration postures such that thirteen calibration images 51 and thirteen calibration images 52 are acquired.

Next, in step S104, based on the position of the identification member 101 in each of the acquired thirteen calibration images 51 and thirteen calibration images 52 and the posture of the robot arm 11 at the time at which each of the thirteen calibration images 51 and the thirteen calibration images 52 is captured, the computation process for the calibration operation is performed to associate the position information of the robot arm 11 with the position information of the image 41 captured by the imager 21 and the image 42 captured by the imager 22.

In this manner, in step S101 to step S104, the calibration operation is performed to associate the position information of the robot arm 11, to which the hand H configured to perform an operation on the workpiece W is attached, with the position information of the captured images 41 and 42, which are images captured by the imager 21 and the imager 22 configured to image the workpiece W.

After the calibration operation in step S101 to step S104 is performed, the operation of the robot arm 11 is controlled based on the image 41 captured by the imager 21 and the image 42 captured by the imager 22 in step S105.

### Advantages of Embodiment

According to this embodiment, the following advantages are achieved.

According to this embodiment, the robot controller 12 and the vision controller 30 are configured or programmed to acquire the reference image 51a, which is one captured image 41 obtained by imaging the identification member 101 for calibration with the imager 21 while the robot arm 11 is placed in one reference posture. The robot controller 12 and the vision controller 30 are also configured or programmed to acquire, in the calibration operation, the reference image 52a, which is one captured image 42 obtained by imaging the identification member 101 for calibration with the imager 22 while the robot arm 11 is placed in the reference posture. The robot controller 12 and the vision controller 30 are configured or programmed to set, in the calibration operation, the plurality of calibration postures of the robot arm 11 based on the acquired reference images 51a and 52a such that the imager 21 and the imager 22 image the identification member 101 in a state in which the identification member 101 is included in the field of view 21a of the imager 21 and the field of view 22a of the imager 22. Furthermore, the robot controller 12 and the vision controller 30 are configured or programmed to acquire, for each of the plurality of set calibration postures, the calibration image 51, which is the captured image 41 for calibration obtained by imaging the identification member 101 with the imager 21, and the calibration image 52, which is the captured image 42 for calibration obtained by imaging the identification member 101 with the imager 22. Accordingly, the plurality of calibration postures of the robot arm 11 are set based on the reference image 51a, which is one captured image 41, and the reference image 52a, which is one captured image 42, and thus as compared with a case in which the calibration postures are set by performing rough transformation in advance based on a plurality of captured images, such as a three-point calibration, it is possible to decrease the time required for the control processes for setting the calibration postures, and decrease the processing amount in the control processes. Consequently, in the calibration operation to associate the position information of the robot arm 11 with the position information of the captured images 41 and 42, increases in the time and processing amount required for the control processes can be reduced or prevented.

According to this embodiment, the robot controller 12 and the vision controller 30 are configured or programmed to set the plurality of calibration postures of the robot arm 11 based on the distance D of the identification position on the actual identification member 101 and the distance D of the identification position on the on-image identification member 101 in the reference images 51a and 52a. Accordingly, by comparing the distance D of the identification position on the actual identification member 101 with the distance D of the identification position on the on-image identification member 101 in the reference images 51a and 52a, the value that is the limit of the movement distance of the actual identification member 101 relative to the imagers 21 and 22 can be easily acquired such that the identification member 101 is placed within the field of view 21a of the imager 21 and the field of view 22a of the imager 22. Therefore, the calibration postures are set based on the distance D of the identification position on the actual identification member 101 and the distance D of the identification position on the on-image identification member 101 in the reference images 51a and 52a such that the calibration postures can be easily set such that the identification member 101 is included in the field of view 21a of the imager 21 and the field of view 22a of the imager 22.

According to this embodiment, the identification member 101 includes the plurality of identification points 101a, and the robot controller 12 and the vision controller 30 are configured or programmed to acquire the distance D of the identification position on the actual identification member 101 based on the actual distance between the plurality of identification points 101a, and acquire the distance D of the identification position on the on-image identification member 101 based on the distance between the plurality of on-image identification points 101a in the reference images 51a and 52a in which the plurality of identification points 101a are imaged so as to set the plurality of calibration postures of the robot arm 11. Accordingly, the distance between the plurality of identification points 101a on the identification member 101 is acquired such that it is possible to more easily acquire the distance D of the identification position on the actual identification member 101 and the distance D of the identification position on the on-image identification member 101 in the reference images 51a and 52a**.** Therefore, the calibration postures can be set more easily such that the identification position on the identification member 101 is included in the field of view 21a of the imager 21 and the field of view 22a of the imager 22.

According to this embodiment, the identification member 101 includes the plate-shaped member on which the plurality of identification points 101a are arranged in a lattice pattern, and the robot controller 12 and the vision controller 30 are configured or programmed to acquire the distance D of the identification position on the actual identification member 101 based on the actual distance between the identification points 101a at the four corners among the plurality of identification points 101a arranged in a lattice pattern, and acquire the distance D of the identification position on the on-image identification member 101 based on the distance between the on-image identification points 101a at the four corners in the reference images 51a and 52a in which the plurality of identification points 101a arranged in a lattice pattern are imaged so as to set the plurality of calibration postures of the robot arm 11. Accordingly, the distance between the identification points 101a at the four corners among the plurality of identification points 101a arranged in a lattice pattern is acquired such that it is possible to still more easily acquire the distance D of the identification position on the actual identification member 101 and the distance D of the identification position on the on-image identification member 101 in the reference images 51a and 52a. Therefore, it is possible to still more easily set the calibration postures such that the identification position on the identification member 101 is included in the field of view 21a of the imager 21 and the field of view 22a of the imager 22.

According to this embodiment, the robot system 100 includes the imager 21 fixed to the first position different from the robot arm 11 to image the workpiece W, and the imager 22 fixed to the second position different from the robot arm 11 separately from the imager 21 to image the workpiece W together with the imager 21. The robot controller 12 and the vision controller 30 are configured or programmed to perform the calibration operation to associate the position information of the robot arm 11 to the position information of each of the captured image 41, which is a captured image captured by the imager 21, and the captured image 42, which is a captured image captured by the imager 22, in order to operate the robot arm 11 based on the captured image 41 and the captured image 42. Furthermore, the robot controller 12 and the vision controller 30 are configured or programmed to acquire, in the calibration operation, the reference image 51a, which is one captured image 41 obtained by imaging the identification member 101 arranged on the hand H with the imager 21 while the robot arm 11 is placed in the reference posture, and the reference image 52a, which is one captured image 42 obtained by imaging the identification member 101 arranged on the hand H with the imager 22 while the robot arm 11 is placed in the reference posture, to set, in the calibration operation, the plurality of calibration postures of the robot arm 11 based on the acquired reference images 51a and 52a such that the imager 21 and the imager 22 image the identification member 101 in a state in which the identification member 101 is included in the field of view 21a of the imager 21 and the field of view 22a of the imager 22, and to acquire, for each of the plurality of set calibration postures, the calibration image 51 and the calibration image 52 captured by the imager 21 and the imager 22, respectively. Accordingly, the plurality of calibration postures of the robot arm 11 can be set such that the identification member 101 is imaged by each of the imager 21 and the imager 22 in a state in which the identification member 101 is included in the field of view 21a of the imager 21 and the field of view 22a of the imager 22, and thus even when two different imagers 21 and 22 are used to three-dimensionally control the operation of the robot arm 11, increases in the time and processing amount required for the control processes can be reduced or prevented in the calibration operation to associate the position information of the robot arm 11 with the position information of each of the captured images 41 and 42.

According to this embodiment, the robot controller 12 and the vision controller 30 are configured or programmed to acquire the reference images 51a and 52a captured such that the identification member 101 is located at the approximate center of the image, to set the four postures of the robot arm 11 such that the identification member 101 is located at each of the four corners of the calibration images 51 and 52 by moving the identification member 101 to the four positions P2, P3, P4, and P5 in the predetermined reference plane S1 including the position P1 of the identification member 101 at the time of capturing the reference images 51a and 52a based on the acquired reference images 51a and 52a, and to set the eight postures of the robot arm 11 such that the identification member 101 is moved to each of the positions P12, P13, P14, and P15 between the four positions P2, P3, P4, and P5 in the reference plane S1 and the point on the first side in the direction perpendicular to the reference plane S1, and each of the positions P22, P23, P24, and P25 between the four positions P2, P3, P4, and P5 in the reference plane S1 and the point on the second side in the direction perpendicular to the reference plane S1. Accordingly, the thirteen calibration postures can be set such that the identification member 101 is moved three-dimensionally relative to the imagers 21 and 22. Therefore, the identification member 101 is moved three-dimensionally such that the position information of the robot arm 11 and the position information of the captured images 41 and 42 can be accurately associated with each other in the calibration operation.

### Modified Examples

The embodiment disclosed this time must be considered as illustrative in all points and not restrictive. The scope of the present disclosure is not shown by the above description of the embodiment but by the scope of claims for patent, and all modifications (modified examples) within the meaning and scope equivalent to the scope of claims for patent are further included.

For example, while the example in which the calibration operation is performed by imaging the identification member 101 arranged on the robot arm 11 with the imager 21 and the imager 22 fixedly arranged at the first position and the second position that are different from the robot arm 11 has been shown in the aforementioned embodiment, the present disclosure is not limited to this. In the present disclosure, the calibration operation may be performed by imaging an identification member arranged at a position at which the workpiece on which an operation is to be performed is placed with an imager placed on the robot arm. That is, an operation may be performed on the workpiece while the workpiece is imaged with the imager placed on the robot arm. In such a case, as in the above embodiment, one reference image is acquired, and a plurality of calibration postures are set based on the distance of the identification position on the on-image identification member in the reference image and the distance of the identification position on the actual identification member.

While the example in which the distance between the identification points 101a arranged at the four corners among the plurality of identification points 101a is acquired using the identification member 101 on which the plurality of identification points 101a are arranged in a lattice pattern such that the distance D of the identification position on the identification member 101 is acquired has been shown in the aforementioned embodiment, the present disclosure is not limited to this. In the present disclosure, the distance of the identification position on the identification member may not be the distance between the identification points. For example, a cross-shaped symbol or a rectangular symbol, the size of which can be identified, may be arranged on the identification member. Alternatively, the identification points may not be arranged in a lattice pattern, but only four identification points may be provided.

While the example in which the operation of the robot arm 11 is controlled based on the captured images 41 and 42 captured by the two imagers, the imager 21 and the imager 22, has been shown in the aforementioned embodiment, the present disclosure is not limited to this. In the present disclosure, a single imager may be used to control the operation of the robot arm.

While the example in which thirteen calibration postures are set has been shown in the aforementioned embodiment, the present disclosure is not limited to this. In the present disclosure, more than thirteen calibration postures may be set. Alternatively, fewer than thirteen calibration postures may be set. Furthermore, the calibration postures may be postures in which the identification member is arranged at a position different from that in the example of the above embodiment. Moreover, the angle of the identification member in the thirteen calibration postures may be different from that in the example of the above embodiment.

While an example of the robot arm 11 that performs an operation to grip the workpiece W has been shown in the aforementioned embodiment, the present disclosure is not limited to this. In the present disclosure, the robot arm may be configured to perform operations to manufacture and assemble a workpiece.

While the example in which the calibration operation is performed by the control processes using two pieces of hardware, the robot controller 12 and the vision controller 30, has been shown in the aforementioned embodiment, the present disclosure is not limited to this. In the present disclosure, the calibration operation may be controlled by a single control device as a controller. Alternatively, the robot controller that controls the operation of the robot arm may perform the computation process to associate the position information of the robot with the position information of the captured images, instead of the vision controller that acquires the captured image. Alternatively, the robot controller may perform a control to detect the identification member from the calibration image.

The functionality of the elements disclosed herein may be implemented using circuitry or processing circuitry that includes general purpose processors, special purpose processors, integrated circuits, application specific integrated circuits (ASICs), conventional circuitry and/or combinations thereof that are configured or programmed to perform the disclosed functionality. Processors are considered processing circuitry or circuitry as they include transistors and other circuitry therein. In the present disclosure, the circuitry, units, or means are hardware that carries out the recited functionality or hardware that is programmed to perform the recited functionality. The hardware may be hardware disclosed herein or other known hardware that is programmed or configured to carry out the recited functionality. When the hardware is a processor that may be considered a type of circuitry, the circuitry, means, or units are a combination of hardware and software, and the software is used to configure the hardware and/or processor.

### Aspects

It will be appreciated by those skilled in the art that the exemplary embodiments described above are specific examples of the following aspects.

### (Item 1)

A robot system comprising:
a robot arm to which a hand operable to perform an operation on a workpiece is attached;
an imager to image the workpiece; and
a controller configured or programmed to perform a calibration operation to associate position information of the robot arm with position information of a captured image captured by the imager in order to operate the robot arm based on the captured image; wherein
the controller is configured or programmed to:
   acquire a reference image, which is the captured image obtained by imaging an identification member for calibration with the imager while the robot arm is placed in one posture;
   set, in the calibration operation, a plurality of calibration postures of the robot arm based on the reference image that has been acquired such that the imager images the identification member in a state in which the identification member is included in a field of view of the imager; and
   acquire, for each of the plurality of calibration postures that have been set, a calibration image, which is the captured image for calibration obtained by imaging the identification member with the imager.

### (Item 2)

The robot system according to item 1, wherein the controller is configured or programmed to set the plurality of calibration postures of the robot arm based on a distance of an identification position on an actual identification member and a distance of an identification position on an on-image identification member in the reference image.

### (Item 3)

The robot system according to item 2, wherein
the identification member includes a plurality of identification points; and
the controller is configured or programmed to acquire the distance of the identification position on the actual identification member based on an actual distance between the plurality of identification points, and acquire the distance of the identification position on the on-image identification member based on a distance between a plurality of on-image identification points in the reference image in which the plurality of identification points are imaged so as to set the plurality of calibration postures of the robot arm.

### (Item 4)

The robot system according to item 3, wherein
the identification member includes a plate-shaped member on which the plurality of identification points are arranged in a lattice pattern; and
the controller is configured or programmed to acquire the distance of the identification position on the actual identification member based on an actual distance between identification points at four corners among the plurality of identification points arranged in the lattice pattern, and acquire the distance of the identification position on the on-image identification member based on a distance between on-image identification points at the four corners in the reference image in which the plurality of identification points arranged in the lattice pattern are imaged so as to set the plurality of calibration postures of the robot arm.

### (Item 5)

The robot system according to any one of items 1 to 4, wherein
the imager includes a first imager fixed to a first position different from the robot arm to image the workpiece, and a second imager fixed to a second position different from the robot arm separately from the first imager to image the workpiece together with the first imager; and
the controller is configured or programmed to:
   perform the calibration operation to associate the position information of the robot arm to position information of each of a first captured image, which is the captured image captured by the first imager, and a second captured image, which is the captured image captured by the second imager, in order to operate the robot arm based on the first captured image and the second captured image;
   acquire, in the calibration operation, a first reference image, which is the first captured image obtained by imaging the identification member arranged on the hand with the first imager while the robot arm is placed in the one posture, and a second reference image, which is the second captured image obtained by imaging the identification member arranged on the hand with the second imager while the robot arm is placed in the one posture;
   set, in the calibration operation, the plurality of calibration postures of the robot arm based on the first reference image and the second reference image that have been acquired such that the first imager and the second imager image the identification member in a state in which the identification member is included in both a field of view of the first imager and a field of view of the second imager; and
   acquire, for each of the plurality of calibration postures that have been set, the calibration image captured by each of the first imager and the second imager.

### (Item 6)

The robot system according to any one of items 1 to 5, wherein the controller is configured or programmed to:
acquire the reference image captured such that the identification member is located at an approximate center of the image;
set four postures of the robot arm such that the identification member is located at each of four corners of the calibration image by moving the identification member to four positions in a predetermined reference plane including a position of the identification member at a time of capturing the reference image based on the reference image that has been acquired; and
set eight postures of the robot arm such that the identification member is moved to each of positions between the four positions in the reference plane and a point on a first side in a direction perpendicular to the reference plane, and each of positions between the four positions in the reference plane and a point on a second side in the direction perpendicular to the reference plane.

### (Item 7)

A method for controlling a robot system, the method comprising:
performing a calibration operation to associate position information of a robot arm to which a hand operable to perform an operation on a workpiece is attached with position information of a captured image captured by an imager operable to image the workpiece; and
controlling operation of the robot arm based on the captured image captured by the imager after performing the calibration operation; wherein
the performing the calibration operation includes:
   acquiring a reference image, which is the captured image obtained by imaging an identification member for calibration with the imager while the robot arm is placed in one posture;
   setting a plurality of calibration postures of the robot arm based on the reference image that has been acquired such that the imager images the identification member in a state in which the identification member is included in a field of view of the imager; and
   acquiring, for each of the plurality of calibration postures that have been set, a calibration image, which is the captured image for calibration obtained by imaging the identification member with the imager.

## Claims

1. A robot system comprising:
a robot arm to which a hand operable to perform an operation on a workpiece is attached;
an imager to image the workpiece; and
a controller configured or programmed to perform a calibration operation to associate position information of the robot arm with position information of a captured image captured by the imager in order to operate the robot arm based on the captured image; wherein
the controller is configured or programmed to:
acquire a reference image, which is the captured image obtained by imaging an identification member for calibration with the imager while the robot arm is placed in one posture;
set, in the calibration operation, a plurality of calibration postures of the robot arm based on the reference image that has been acquired such that the imager images the identification member in a state in which the identification member is included in a field of view of the imager; and
acquire, for each of the plurality of calibration postures that have been set, a calibration image, which is the captured image for calibration obtained by imaging the identification member with the imager.

2. The robot system according to claim 1, wherein the controller is configured or programmed to set the plurality of calibration postures of the robot arm based on a distance of an identification position on an actual identification member and a distance of an identification position on an on-image identification member in the reference image.

3. The robot system according to claim 2, wherein
the identification member includes a plurality of identification points; and
the controller is configured or programmed to acquire the distance of the identification position on the actual identification member based on an actual distance between the plurality of identification points, and acquire the distance of the identification position on the on-image identification member based on a distance between a plurality of on-image identification points in the reference image in which the plurality of identification points are imaged so as to set the plurality of calibration postures of the robot arm.

4. The robot system according to claim 3, wherein
the identification member includes a plate-shaped member on which the plurality of identification points are arranged in a lattice pattern; and
the controller is configured or programmed to acquire the distance of the identification position on the actual identification member based on an actual distance between identification points at four corners among the plurality of identification points arranged in the lattice pattern, and acquire the distance of the identification position on the on-image identification member based on a distance between on-image identification points at the four corners in the reference image in which the plurality of identification points arranged in the lattice pattern are imaged so as to set the plurality of calibration postures of the robot arm.

5. The robot system according to claim 1, wherein
the imager includes a first imager fixed to a first position different from the robot arm to image the workpiece, and a second imager fixed to a second position different from the robot arm separately from the first imager to image the workpiece together with the first imager; and
the controller is configured or programmed to:
perform the calibration operation to associate the position information of the robot arm to position information of each of a first captured image, which is the captured image captured by the first imager, and a second captured image, which is the captured image captured by the second imager, in order to operate the robot arm based on the first captured image and the second captured image;
acquire, in the calibration operation, a first reference image, which is the first captured image obtained by imaging the identification member arranged on the hand with the first imager while the robot arm is placed in the one posture, and a second reference image, which is the second captured image obtained by imaging the identification member arranged on the hand with the second imager while the robot arm is placed in the one posture;
set, in the calibration operation, the plurality of calibration postures of the robot arm based on the first reference image and the second reference image that have been acquired such that the first imager and the second imager image the identification member in a state in which the identification member is included in both a field of view of the first imager and a field of view of the second imager; and
acquire, for each of the plurality of calibration postures that have been set, the calibration image captured by each of the first imager and the second imager.

6. The robot system according to claim 1, wherein the controller is configured or programmed to:
acquire the reference image captured such that the identification member is located at an approximate center of the image;
set four postures of the robot arm such that the identification member is located at each of four corners of the calibration image by moving the identification member to four positions in a predetermined reference plane including a position of the identification member at a time of capturing the reference image based on the reference image that has been acquired; and
set eight postures of the robot arm such that the identification member is moved to each of positions between the four positions in the reference plane and a point on a first side in a direction perpendicular to the reference plane, and each of positions between the four positions in the reference plane and a point on a second side in the direction perpendicular to the reference plane.

7. A method for controlling a robot system, the method comprising:
performing a calibration operation to associate position information of a robot arm to which a hand operable to perform an operation on a workpiece is attached with position information of a captured image captured by an imager operable to image the workpiece; and
controlling operation of the robot arm based on the captured image captured by the imager after performing the calibration operation; wherein
the performing the calibration operation includes:
acquiring a reference image, which is the captured image obtained by imaging an identification member for calibration with the imager while the robot arm is placed in one posture;
setting a plurality of calibration postures of the robot arm based on the reference image that has been acquired such that the imager images the identification member in a state in which the identification member is included in a field of view of the imager; and
acquiring, for each of the plurality of calibration postures that have been set, a calibration image, which is the captured image for calibration obtained by imaging the identification member with the imager.
